# EUROPÄISCHE PATENTSCHRIFT

(11) **EP 2 961 171 B1**
(45) Veröffentlichungstag und Bekanntmachung des Hinweises auf die Patenterteilung: **04.08.2021**
(21) Anmeldenummer: 15001914.9
(22) Anmeldetag: 29.06.2015
(51) Int. Cl.: H04N 21/2343, H04N 21/43, H04N 21/845, H04N 21/8547

(54) **VERFAHREN ZUM KONTINUIERLICHEN ÜBERWACHEN EINER SYNCHRONITÄT ZWISCHEN VERSCHIEDENEN BEIM HTTP ADAPTIVEN STREAMING VERWENDETEN QUALITÄTSPROFILEN**
METHOD FOR THE CONTINUOUS MONITORING OF A SYNCHRONISM BETWEEN DIFFERENT ADAPTIVE STREAMING QUALITY PROFILES USED IN HTTP
PROCEDE DE SURVEILLANCE CONTINUE D'UN SYNCHRONISME ENTRE DIFFERENTS PROFILS DE QUALITES UTILISES DANS LA DIFFUSION EN CONTINU A DEBIT ADAPTATIF HTTP

(30) Priorität: 27.06.2014 DE 102014109088
(43) Veröffentlichungstag der Anmeldung: 30.12.2015
(73) Patentinhaber: Deutsche Telekom AG, 53113 Bonn (DE)
(72) Erfinder: Schön, Sebastian, 70825 Korntal-Münchingen (DE)
(74) Vertreter: Raible Deissler Lehmann Patentanwälte PartG mbB

(56) Entgegenhaltungen:
- WO-A1-2011/102792
- US-A1- 2002 126 221
- US-A1- 2009 150 557
- US-A1- 2011 072 105
- None

## Beschreibung

Die vorliegende Erfindung betrifft ein Verfahren zum dauerhaften bzw. kontinuierlichen Überwachen einer Synchronität zwischen verschiedenen beim HTTP adaptiven Streaming verwendeten Qualitätsprofilen bei jeweiliger Bereitstellung eines Videos mit Einzelbildern.

Videos bspw. werden in verschiedenen Videoqualitäten d. h. mit verschiedenen Qualitätsprofilen codiert. Das sogenannte HTTP basierte adaptive Streaming, auch als "http-based adaptive streaming" bezeichnet, verwendet konventionelle Webserver und überträgt Daten über das HTTP-Protokoll. Videofiles werden in kleinere aufeinanderfolgende Fragmente unterteilt. Man spricht dabei von Fragmentierung. Jedes Fragment besteht dabei aus einer Aufeinanderfolge von mehreren Frames bzw. Einzelbildern des entsprechenden Videofiles bzw. Videos. Bei einem 1Mbps-Video bspw. kann dadurch die Datenfragmentgröße bei einer Fragment-Länge/-Dauer von 2 Sekunden lediglich 250 KB sein. Man spricht von "adpativem" Streaming, weil bspw. ein Video in mehreren verschiedenen Qualitätsprofilen codiert sein kann. Es kann sich dabei bspw. um Qualitätsprofile mit einer Übertragungsrate von 5 Mbps, 10 Mbps und 15 Mbps handeln. Basierend auf vorliegenden Netzwerkbedingungen sowie einer CPU-Kapazität des zur Anzeige des Videos eingesetzten Rechners wird bspw. eine Desktopanwendung zu Beginn von dem Webserver das Video mit einem Qualitätsprofil von 5 Mbps herunterladen. Wird nunmehr jedoch erkannt, dass das vorliegend übertragende Netzwerk sehr gut ist, kann auf eine höhere Qualität bzw. ein höheres Qualitätsprofil mit einer Übertragungsrate von bspw. 10 Mbps umgeschaltet werden. Aufgrund dessen spricht man von "adaptivem" Streaming.

Das adaptive Streaming steht so im Gegensatz zum traditionellen Streaming, bei welchem nach Start eines Videos durch einen entsprechenden Client die Bitraten dieses Videoclips bzw. Videofiles unverändert bleiben, unabhängig davon, ob die zugrundeliegenden Netzwerkbedingungen sich ändern. Bei dem HTTP basierten adaptiven Streaming hingegen erfolgt in Abhängigkeit der Netzwerkbedingungen ggf. ein nahtloser Übergang bzw. ein nahtloses Umschalten zwischen verschiedenen Qualitätsprofilen des entsprechenden Videofiles, je nachdem wie das dem Client zugrundeliegende Netzwerk sowie die CPU-Bedingungen sind bzw. sich ändern.

Das HTTP basierte adaptive Streaming verwendet, wie bereits im Namen verankert, zur Übertragung von Daten das HTTP-Protokoll, welches auf die Skalierbarkeit des gesamten Internets gestützt ist.

Wie bereits voranstehend erwähnt, verwendet das HTTP adaptive Streaming verschiedene Qualitätsprofile für ein zu streamendes File, zwischen denen seitens eines Clients gewählt werden kann. Diese Qualitätsprofile können sich bspw. in ihrer jeweiligen Auflösung, der pro Sekunde übertragenen Frames, d. h. der Übertragungsrate sowie der jeweiligen Bandbreite voneinander unterscheiden.

In Abhängigkeit von der verfügbaren Netzwerkbandbreite, wählt ein Client dasjenige Qualitätsprofil mit der Bandbreite aus, die seitens des Clients handhabbar ist. Aufgrund der Tatsache, dass die Netzwerkbandbreite variieren kann, insbesondere wenn sich ein Nutzer bei Verwendung bspw. eines Smartphones von einem Ort zu einem anderen Ort bewegt, kann der Client ein entsprechend anderes Qualitätsprofil wählen. Das bedeutet, wie voranstehend beschrieben, dass der Client von einem Qualitätsprofil zu einem anderen Qualitätsprofil springen kann, indem die verfügbare Bandbreite des zugrundliegenden Netzwerks häufig bestimmt bzw. berechnet wird und jeweils das an die aktuell verfügbare Bandbreite angepasste Qualitätsprofil ausgewählt wird.

Um jedoch keine Unterbrechung bei Audio- und/oder Videofiles zu haben, müssen die Qualitätsprofile, d. h. die in den jeweiligen Qualitätsprofilen bereitgestellten Frames des Audio- und/oder Videofiles stets synchron zueinander sein. Das bedeutet, dass der Ausgang eines Qualitätsprofils, d. h. der letzte in dem Qualitätsprofil übertragene Frame mit dem Beginn eines neuen gewählten Qualitätsprofils, d. h. dem ersten in dem neuen Qualitätsprofil zu übertragenden Frame ineinander greifen muss. Um in der Lage zu sein, die Qualitätsprofile hinsichtlich ihrer zueinander bestehenden Synchronität zu überwachen, wird vorliegend ein Verfahren zur kontinuierlichen Überwachung der Synchronität zwischen verschiedenen Qualitätsprofilen beim HTTP adaptiven Streaming vorgestellt.

Synchronität der Qualitätsprofile bezieht sich dabei auf die Synchronität unter den in den jeweiligen verschiedenen Qualitätsprofilen bereitgestellten Frames bzw. Einzelbildern eines Videos bzw. Videofiles.

"Kontinuierlich" bedeutet hierbei, dass die jeweilige Überprüfung aus Synchronität in regelmäßigen zeitlichen und angemessen kleinen Abständen durchgeführt wird.

Derzeit sind zwar auch Überwachungsmechanismen verfügbar, diese unterstützen jedoch lediglich ein Messen von Videodatenfehlern, wie bspw. "schwarzer Bildschirm", "eingefrorener Rahmen bzw. Bilder" oder gar kein Video, nicht aber eine fehlende Korrelation zwischen verschiedenen Qualitätsprofilen. Es wird keine Messung dahingehend vorgeschlagen, die prüft, inwieweit Streams von verschiedenen Qualitätsprofilen zueinander synchron sind oder nicht. Selbst wenn sicher gestellt werden kann, dass die Qualitätsprofile bzw. die darin bereitgestellten Streams nicht fehlerhaft sind, fehlt ein Überwachen, ob die verschiedenen Qualitätsprofile bzgl. eines bestimmten Streams in Synchronität zueinander sind.

WO 2011/102792 A1 beschreibt eine Überprüfung eines temporären Verlaufs von Teilen eines Medienstreams anhand sogenannter "Key frames". US 2009/150557 A1 beschreibt einen "download agent" zum Herunterladen von Daten eines Medienstreams. Dieser download agent dient zum dynamischen Auswählen von Wiedergaberaten zum Bereitstellen von Medieninhalten. US 2011/072105 A1 beschreibt ein Verfahren zum Auswählen eines Medienstreams aus einer Vielzahl alternativer Medienstreams, die von einer Vielzahl alternativer Quellen bereitgestellt werden.

Demnach war es eine Aufgabe der vorliegenden Erfindung eine Möglichkeit vorzusehen, verschiedene Qualitätsprofile beim Bereitstellen eines Audio/Video Inhalts über einen HTTP adaptiven Streaming Service auf Synchronität zueinander zu überwachen.

Vor diesem Hintergrund stellt die vorliegende Erfindung ein Verfahren mit den Merkmalen des unabhängigen Patentanspruchs 1 bereit. Ferner wird ein Computerprogrammprodukt sowie ein Computerprogramm vorgestellt. Ausgestaltungen sind den jeweils abhängigen Ansprüchen sowie der Beschreibung und den Zeichnungen zu entnehmen.

Gemäß Patentanspruch 1 wird ein Verfahren zum kontinuierlichen Überwachen einer Synchronität zwischen verschiedenen beim HTTP adaptiven Streaming verwendeten Qualitätsprofilen bei jeweiliger Bereitstellung mindestens eines Videos bzw. Videostreams mit Einzelbildern bzw. Frames bereitgestellt. Dabei wird für jedes Qualitätsprofil einer Vielzahl Qualitätsprofile, die jeweils verschiedenen Übertragungsraten zugeordnet sind, für jedes bei einer durchgeführten Fragmentierung resultierende Fragment mindestens ein bestimmtes Einzelbild ermittelt, wobei die jeweils zu ermittelnden Einzelbilder der sich entsprechenden Fragmente der verschiedenen Qualitätsprofile aus der Vielzahl Qualitätsprofile sich bezüglich ihrer Anordnung innerhalb des jeweiligen Fragments entsprechen. Ferner wird ein Inhalt der so ermittelten Einzelbilder der sich entsprechenden Fragmente der verschiedenen Qualitätsprofile auf Gleichheit bzw. Übereinstimmung untereinander geprüft.

Das erfindungsgemäße Verfahren kann sowohl bei Bereitstellung eines alleinigen Audiostreams mit Audioframes als auch bei einem Videostream mit Videoframes angewendet werden. Im Folgenden wird anstelle von Audio- bzw. Videoframes generell von Frames gesprochen.

Dabei muss nicht zwangsläufig eine 100%ige Übereinstimmung vorliegen, um im Rahmen der vorliegenden Erfindung eine "Gleichheit" bzw. "Übereinstimmung" zwischen den ermittelten Einzelbildern zu bejahen, solange sich die ggf. vorliegenden Abweichungen der Einzelbilder untereinander in einem definierten Toleranzbereich befinden. Dieser Toleranzbereich ist vorzugeben und wird in der Regel in Abhängigkeit der Qualitätsprofile festgelegt.

In einer möglichen Ausgestaltung des erfindungsgemäßen Verfahrens wird für jedes Qualitätsprofil zusätzlich ein Zeitstempel des jeweils mindestens einen für jedes Fragment ermittelten bestimmten Einzelbilds ermittelt. Ferner werden die jeweiligen Zeitstempel der ermittelten bestimmten Einzelbilder der sich entsprechenden Fragmente der verschiedenen Qualitätsprofile auf Gleichheit bzw. Übereinstimmung untereinander geprüft. Wie bereits voranstehend erläutert, muss auch dabei nicht zwangsläufig eine 100%ige Übereinstimmung vorliegen, um im Rahmen der vorliegenden Erfindung eine "Gleichheit" bzw. "Übereinstimmung" zwischen den ermittelten Einzelbildern bzw. hier konkret der jeweiligen Zeitstempel der ermittelten Einzelbilder zu bejahen, solange sich die ggf. vorliegenden Abweichungen der Einzelbilder bzw. deren jeweiliger Zeitstempel untereinander in einem definierten Toleranzbereich befinden.

In weiterer Ausgestaltung des erfindungsgemäßen Verfahrens wird als das mindestens eine für jedes Fragment zu ermittelnde Einzelbild ein jeweiliges Anfangsbild des jeweiligen Fragments ermittelt.

Ein Fragment, das bei einer oben beschriebenen Fragmentierung eines Datenstroms bzw. Streams entsteht, besteht aus einer oder mehreren sogenannten "group(s) of pictures" (GoPs). Eine GoP entspricht in der Regel einer festen Ordnung von in Abhängigkeit untereinander codierten, aufeinanderfolgenden Einzelbildern bzw. Frames im Bildstrom eines Videos. Das erste Einzelbild in einer GoP muss dabei immer ein sogenannter I-Frame bzw. ein Intra-Bild sein. Ein I-Frame ist ein Frame, der einem vollständigen Standbild ähnlich zu einem JPEG-Bild entspricht. Diese I-Frames sind von anderen Bildtypen unabhängig und haben in den meisten Fällen den höchsten Bedarf an Speicherplatz bzw. Bandbreite. Ein geringeren Bedarf an Speicherplatz bzw. Bandbreite benötigen die sogenannten "predictive coded frames" oder auch P-Frames genannt. P-Frames enthalten lediglich Differenzinformationen aus dem vorangehenden I- oder P-Frame. Sogenannte bidirektionale Frames (B-Frames) enthalten Differenzinformationen in Bezug auf den vorangegangen und/oder den nächsten I-Frame oder P-Frame und benötigen aufgrund dieser Tatsache den wenigsten Speicherplatz bzw. die wenigste Bandbreite.

Eine typische Ordnung einer GoP könnte bspw. folgendermaßen aussehen: I B BBPBBBPBBB

Da P- und B-Frames auf Informationen der I-Frames basieren, nennt man die I-Frames auch "Key-Frames" oder Schlüsselrahmen. Demnach muss im Fall eines Videos das erste Bild des Videos stets ein I-Frame sein. Gemäß HTTP adaptiven Streaming werden bei der Fragmentierung die Fragmente stets durch Bildung von Files mit einem oder mehreren GoPs gebildet. Wie voranstehend erläutert, beginnt jede GoP mit einem I-Frame.

Wie eingangs beschrieben, laden Clients beim HTTP adaptiven Streaming diese Fragmente herunter und können auf Basis der zuvor berechneten verfügbaren Netzwerkbandbreite und der ihnen zur Verfügung stehenden CPU Kapazität entscheiden, welches Fragment mit welchem Qualitätsprofil heruntergeladen wird.

Startet man einen Download der ersten Fragmente mit dem höchsten Qualitätsprofil und springt dann zu Fragmenten eines niedrigeren Qualitätsprofils, d. h. mit geringerer Auflösung, geringerer Übertragungsrate und/oder geringerer Bandbreite, aufgrund fehlender Netzwerkbandbreite, so ergibt sich dabei weder bei einem Audio- noch bei einem Videostream, ein Informationsverlust, da die Fragmente bzw. die von ihnen umfassten Frames mit dem niedrigeren Qualitätsprofil keine Abhängigkeiten zu Frames der zuvor heruntergeladenen Fragmente aufweisen. Das bedeutet, dass in einem I-Frame am Beginn eines Fragments von jedem Qualitätsprofil ein und derselbe Frame eines Videos codiert sein muss. Andernfalls würde sich ein Informationsverlust beim Springen zwischen verschiedenen Qualitätsprofilen ergeben und die Codierung wäre fehlerhaft.

Ein Beispiel für eine derartige fehlerhafte Codierung wäre bspw. gegeben, wenn ein Qualitätsprofil 1 mit 300 kbit/s über die Audio- und Video-Bandbreite einen I-Frame nach einem Szenenwechsel A codiert hätte, während ein Qualitätsprofil 2 mit 500 kbit/s über die Audio- Video-Bandbreite einen I-Frame vor dem Szenenwechsel A codiert hätte, da dann bei einem Wechsel vom Qualitätsprofil 1 zu Qualitätsprofil 2 der Szenenwechsel A durch den Nutzer zwei Mal gesehen werden würde.

Gemäß einer weiteren Ausführungsform des erfindungsgemäßen Verfahrens wird für jedes Qualitätsprofil zusätzlich ein Zeitstempel des jeweiligen ersten Einzelbildes eines jeden bei der durchgeführten Fragmentierung resultierenden Fragments ermittelt und die jeweiligen Zeitstempel der sich entsprechenden Einzelbilder der verschiedenen Qualitätsprofile werden auf Gleichheit bzw. Übereinstimmung untereinander bzw. zueinander geprüft.

Wenn bei einer Fragmentierung bzw. wenn die entsprechende Fragmentierungssoftware so konzipiert ist, dass Fragmente mit mehr als nur einer GoP gebildet werden, so kann es passieren, dass ein Fragment eines Qualitätsprofils mehr oder weniger GoPs, d.h. nicht die gleichen GoPs umfasst als das entsprechende Fragment eines anderen Qualitätsprofils. Eine Asynchronität zwischen den entsprechenden Qualitätsprofilen würde dann der Zeit entsprechen, um welche die GoPs der zwei Qualitätsprofile sich voneinander unterscheiden. Dazu wird erfindungsgemäß nunmehr vorgeschlagen, neben dem Abgleich der Anfangsbilder eines Fragments, insbesondere hinsichtlich deren jeweiligen Inhalts, ferner auch einen jeweiligen Zeitstempel eines jeweiligen Anfangsbildes eines Fragments eines Qualitätsprofils mit dem jeweiligen Zeitstempel des entsprechenden Anfangsbildes eines Fragments eines anderen Qualitätsprofils zu vergleichen. Nur wenn diese Zeitstempel identisch sind, ist davon auszugehen, dass die Fragmentierung bei beiden unterschiedlichen Qualitätsprofilen synchron ist.

Das erfindungsgemäße Verfahren wird vorzugsweise für Live-TV und/oder für Video-On-Demand (VoD), was auch als Video auf Anfordern oder Abrufvideo bezeichnet wird, verwendet. Ferner sind für eine Anwendung des erfindungsgemäßen Verfahrens auch alle anderen Verteilungen von Audio- und/oder Videodaten über HTTP adaptives Streaming denkbar.

Wie bereits erläutert, können sich gemäß weiterer Ausgestaltung des erfindungsgemäßen Verfahrens die Qualitätsprofile in ihrer jeweiligen Auflösung, in der von ihnen benötigten Bandbreite und/oder ihrer Übertragungsrate unterscheiden.

In weiterer Ausgestaltung des erfindungsgemäßen Verfahrens wird das Verfahren von einem Client ausgeführt, wobei die bei der Fragmentierung jeweils resultierenden Fragmente zum Durchführen des Verfahrens von dem Client von einem Zentralrechner bzw. Server heruntergeladen werden.

Sollten die Fragmente verschlüsselt vorliegen, so werden sie von dem entsprechenden Client vor Durchführung des erfindungsgemäßen Verfahrens entschlüsselt.

In weiterer Ausgestaltung wird der Client auf einem Nutzerendgerät, wie bspw. einem Smartphone implementiert, so dass mit Hilfe des entsprechenden Smartphones das erfindungsgemäße Verfahren durchgeführt werden kann.

Ferner betrifft die Erfindung ein Computerprogrammprodukt mit einem computerlesbaren Medium und einem auf dem computerlesbaren Medium gespeicherten Computerprogramm mit Programmcodemitteln, die dazu geeignet sind, bei Ablauf des Computerprogramms auf einem Computer bzw. einer geeigneten Recheneinheit das erfindungsgemäße Verfahren auszuführen.

Die Erfindung betrifft desweiteren ein Computerprogramm mit Programmcodemitteln, die dazu geeignet sind, bei Ablauf des Computerprogramms auf einem Computer bzw. einer geeigneten Recheneinheit das erfindungsgemäße Verfahren auszuführen.

Es versteht sich, dass die voranstehend genannten Merkmale nicht nur in der jeweils angegebenen Kombination, sondern auch in anderen Kombinationen oder in Alleinstellung verwendbar sind, ohne den Rahmen der vorliegenden Erfindung zu verlassen.
Figur 1 zeigt in schematischer Darstellung an einem Beispiel eines Streamings, wie bei verschiedenen Qualitätsprofilen eine Ausführungsform des erfindungsgemäßen Verfahrens zur Überprüfung der Synchronität durchzuführen ist.
Figur 2 zeigt am Beispiel dreier verschiedener Qualitätsprofile, wie eine weitere Ausführungsform des erfindungsgemäßen Verfahrens durchzuführen ist.

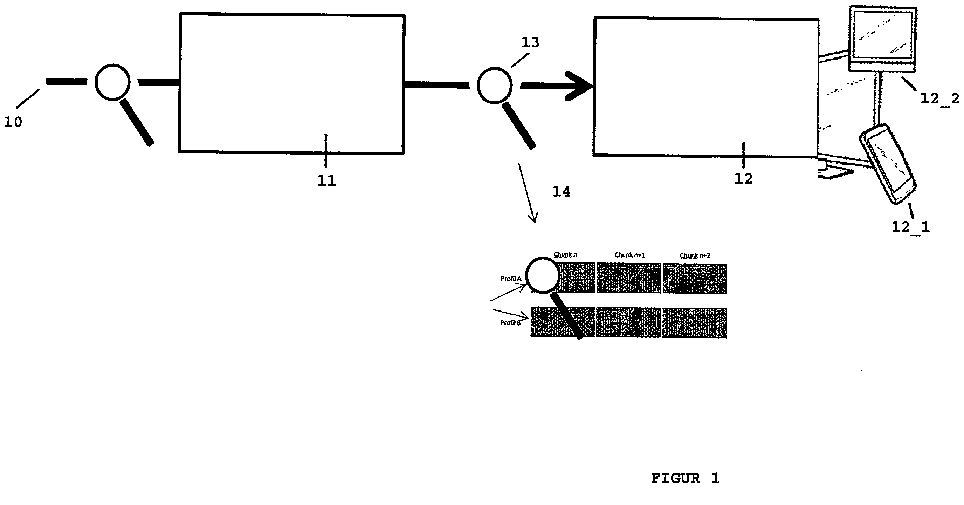

Figur 1 zeigt eine schematische Darstellung eines Streamings, d. h. einer kontinuierlichen Übertragung von Daten, insbesondere Video- und/oder Audiodaten, ausgehend von einem Eingang 10, bei dem ein Multibitrate Stream oder ein Multicast Stream bereitgestellt wird, und über einen Service Provider, wie bspw. ein OTT Streaming Server 11 letztlich weiter an ein oder in der Regel mehrere Endgeräte eines Nutzers 12 geleitet wird. Der hier dargestellte OTT Streaming Server 11 bezeichnet im vorliegenden Beispiel eine kostenlose Online-Übermittlung von Video- und/oder Audioinhalten, ohne dass ein Internet-Service Provider in die Kontrolle oder Verbreitung der entsprechenden Inhalte involviert ist. Dabei bezeichnet OTT "Over-the-Top Content". Dieser Server 11 nimmt eine Fragmentierung 13 des an ihn übertragenen Videos bzw. des entsprechenden Datenstroms vor. Die Fragmente werden sodann an ein jeweiliges Endgerät 12 eines Endverbrauchers weitergeleitet. Bei den Endgeräten 12 kann es sich bspw. entweder um ein Smartphone 12_1 oder um einen PC 12_2 oder um jedes andere denkbare, zur Anzeige von Video- und/oder Audiodaten geeignete Endgerät handeln. Da die Endgeräte 12_1 und 12_2 in der Regel über verschiedene Rechenkapazitäten verfügen und ferner sich oft auch in verschiedenen Netzen befinden bzw. im Fall eines Smartphones sich von einem Netz in ein anderes Netz bewegen können, so unterscheiden sie sich in der Regel bezüglich der ihnen zur Verfügung stehenden Netzwerkbandbreite und auch der ihnen zur Verfügung stehenden CPU-Kapazität. Davon abhängig wird, wie bereits voranstehend erläutert, beim HTTP adaptiven Streaming ein Qualitätsprofil zur Anzeige der übertragenen Daten ausgewählt, so dass der Nutzer eine an die Umstände angepasste Anzeige mit einem passenden Qualitätsprofil erhält. Um dabei jedoch sicherzustellen, dass auch bei einem möglichen Wechsel von einem Qualitätsprofil A zu einem anderen Qualitätsprofil B dieser Wechsel für einen Nutzer quasi transparent bzw. unbemerkt vonstatten geht, muss sichergestellt sein, dass der Stream bzw. der übertragene Datenstrom in allen zur Verfügung stehenden Qualitätsprofilen gleich ist bzw. die Streams der verschiedenen Qualitätsprofile zueinander synchron sind. Um dies zu überwachen, werden die Fragmente, in welche nach der durch den OTT-Streamserver 11 durchgeführten Fragmentierung 13 der Datenstrom zerlegt ist, gemäß einer Ausführungsform des erfindungsgemäßen Verfahrens in einem Schritt 14 für verschiedene Qualitätsprofile verglichen. Jeder Stream liegt für jedes verfügbare Qualitätsprofil in Fragmenten vor. Im vorliegenden Fall liegen zwei Qualitätsprofile vor, nämlich ein Qualitätsprofil A und ein Qualitätsprofil B. Der Stream liegt in beiden Qualitätsprofilen vor und wurde aufgrund der durchgeführten Fragmentierung in einzelne aufeinander folgende Fragmente oder sogenannte "Chunks" unterteilt, wobei wiederum jedes Fragment aus einer Mehrzahl von aufeinanderfolgenden Frames besteht. Hier dargestellt ist ein Ausschnitt des Streams bestehend aus einer Aneinanderreihung von drei Fragmenten, nämlich Fragment n (Chunk n), Fragment n+1(Chunk n+1) und Fragment n+2 (Chunk n+2). Jedes der drei hier gezeigten Fragmente besteht wiederum aus einer Vielzahl aufeinanderfolgender Frames. Jeder dieser Frames umfasst einen Zeitstempel. Um Synchronität bejahen zu können, muss der Zeitstempel jedes ersten Frames bzw. Anfangsbildes eines Fragments in jedem Qualitätsprofil gleich sein. Das bedeutet, dass zur Überprüfung der Synchronität geprüft wird, ob der Zeitstempel des Anfangsframes bzw. des Anfangsbildes eines Fragments von Qualitätsprofil A der gleiche ist wie der Zeitstempel des entsprechenden Anfangsframes des entsprechenden Fragments von Qualitätsprofil B. Nur wenn dies bejaht werden kann, kann Synchronität vorliegen.

Desweiteren muss jedoch auch überprüft werden, inwieweit der jeweilige Anfangsframe eines Fragments von Qualitätsprofil A dem Anfangsframe des entsprechenden Fragments von Qualitätsprofil B entspricht, d. h. es wird ferner verglichen, inwieweit ein jeweiliger Anfangsframe eines Fragments von Qualitätsprofil A mit dem Anfangsframe des entsprechenden Fragments von Qualitätsprofil B übereinstimmt. Dadurch wird sichergestellt, dass der codierte Inhalt der durch Server 11 durchgeführten Fragmentierung und die Fragmentierung selbst für verschiedene Qualitätsprofile, hier für Qualitätsprofil A und Qualitätsprofil B, synchron ist.

Allerdings kann auch jeder beliebige andere Frame eines Fragments des Qualitätsprofils A herangezogen werden und mit dem ihm entsprechenden Frame des entsprechenden Fragments des Qualitätsprofils B verglichen werden. Sich entsprechende Frames bedeutet dabei, dass diese sich insbesondere hinsichtlich ihrer jeweiligen Position innerhalb zweier sich ebenfalls wiederum entsprechender Fragmente eines Videos, das in Qualitätsprofil A und in Qualitätsprofil B bereitgestellt wird, entsprechen. Bspw. könnte auch der jeweils x-te Frame des i-ten Fragments, das in Qualitätsprofil A vorliegt, entsprechend mit dem x-ten Frame des i-ten Fragments, das in Qualitätsprofil B vorliegt, verglichen werden.

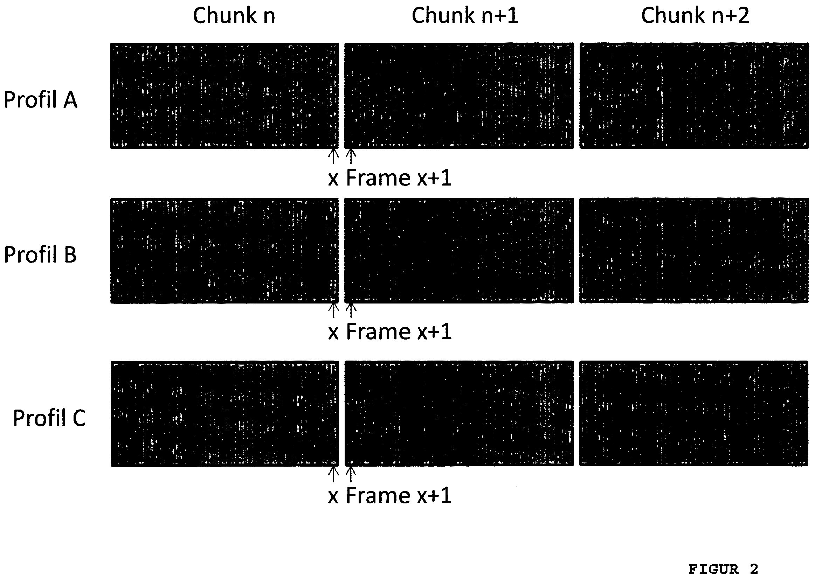

Figur 2 zeigt nochmals in vergrößerter Darstellung einen nach Durchführung einer Fragmentierung vorliegenden Datenstrom in verschiedenen Qualitätsprofilen, nämlich Qualitätsprofil A, Qualitätsprofil B und Qualitätsprofil C. Der Datenstrom wurde jeweils in eine Mehrzahl von Fragmenten bzw. Chunks unterteilt, wobei hier ein Ausschnitt des jeweiligen Datenstroms, nämlich in Form von drei aufeinanderfolgenden Fragmenten, Fragment n bzw. Chunk n, Fragment n+1 bzw. Chunk n+1 und Fragment n+2 bzw. Chunk n+2 gezeigt ist. Jedes Fragment besteht wiederum aus einer Mehrzahl von Frames. Anhand von Figur 2 kann nochmals erläutert werden, wie eine Synchronität überwacht werden kann. Dabei wird überprüft, ob bspw. Frame x+1 von Fragment n+1 von Qualitätsprofil A den gleichen Inhalt und den gleichen Zeitstempel wie Frame x+1 von Fragment n+1 von Qualitätsprofil B und von Qualitätsprofil C hat. Nur wenn sowohl der Inhalt wie auch der jeweilige Zeitstempel zwischen den Qualitätsprofilen A, B und C identisch ist, so sind die Qualitätsprofile A, B und C zueinander synchron bzw. die jeweiligen Streams in den verschiedenen Qualitätsprofilen A, B und C sind synchron zueinander. Falls Synchronität vorliegt, ist ein Wechsel zwischen den Qualitätsprofilen unproblematisch und für den Endverbraucher quasi nicht erkennbar. Falls der Zeitstempel der jeweiligen Anfangsframes bzw. der Anfangsbildern von jeweiligen sich entsprechenden Fragmenten identisch sein sollte, der Inhalt jedoch über einen Toleranzbereich hinaus voneinander abweicht, so kann keine Synchronität zwischen den verschiedenen Qualitätsprofilen vorliegen.

Anstelle der jeweiligen Anfangsframes bzw. der Anfangsbilder können auch andere sich jeweils entsprechende Frames zwischen sich entsprechenden Fragmenten verschiedener Qualitätsprofile verglichen und auf Gleichheit bzw. Übereinstimmung geprüft werden. Ein Fragment hat in der Regel eine Mehrzahl von Frames in einer bestimmten Anordnung. Im Prinzip kann jeder dieser Frames für einen erfindungsgemäß vorgesehenen Gleichheitsvergleich herangezogen werden. Es ist dabei darauf zu achten, dass der Gleichheitsvergleich zwischen sich entsprechenden Frames von sich entsprechenden Fragmenten, die in verschiedenen Qualitätsprofilen vorliegen, vorgenommen wird.

Dabei muss nicht zwangsläufig eine 100%ige Übereinstimmung vorliegen, um im Rahmen der vorliegenden Erfindung eine "Gleichheit" bzw. "Übereinstimmung" zu bejahen, solange sich die ggf. vorliegenden Abweichungen in einem definierten Toleranzbereich befinden.

## Patentansprüche

1. Verfahren zum kontinuierlichen Überwachen einer Synchronität zwischen verschiedenen beim HTTP adaptiven Streaming verwendeten Qualitätsprofilen bei jeweiliger Bereitstellung mindestens eines Videos mit Einzelbildern, bei dem für jedes Qualitätsprofil einer Vielzahl Qualitätsprofile, die jeweils verschiedenen Übertragungsraten zugeordnet sind, für jedes bei einer durchgeführten Fragmentierung resultierende Fragment mindestens ein bestimmtes Einzelbild ermittelt wird, wobei die jeweils zu ermittelnden Einzelbilder der sich entsprechenden Fragmente der verschiedenen Qualitätsprofile aus der Vielzahl Qualitätsprofile sich bezüglich ihrer Anordnung innerhalb des jeweiligen Fragments entsprechen, und ein Inhalt der so ermittelten Einzelbilder der sich entsprechenden Fragmente der verschiedenen Qualitätsprofile auf Gleichheit untereinander geprüft wird, und eine Gleichheit zwischen den ermittelten Einzelbildern bejaht wird, solange sich vorliegende Abweichungen der ermittelten Einzelbilder untereinander in einem definierten Toleranzbereich befinden, wobei das Verfahren von einem Client ausgeführt wird, wobei die bei der Fragmentierung jeweils resultierenden Fragmente zur Durchführung des Verfahrens von dem Client runtergeladen werden.

2. Verfahren nach Anspruch 1, bei dem für jedes Qualitätsprofil zusätzlich ein Zeitstempel des jeweils mindestens einen für jedes Fragment ermittelten bestimmten Einzelbilds ermittelt und die jeweiligen Zeitstempel der ermittelten bestimmten Einzelbilder der sich entsprechenden Fragmente der verschiedenen Qualitätsprofile auf Gleichheit untereinander geprüft werden.

3. Verfahren nach Anspruch 1 oder 2, bei dem als das mindestens eine für jedes Fragment zu ermittelnde Einzelbild ein jeweiliges Anfangsbild des jeweiligen Fragments ermittelt wird.

4. Verfahren nach Anspruch 3, bei dem zusätzlich überprüft wird, ob das jeweilige Anfangsbild ein I-Frame ist.

5. Verfahren nach einem der voranstehenden Ansprüche, bei dem mehrere sich in den sich entsprechenden Fragmenten der verschiedenen Qualitätsprofile entsprechende Einzelbilder ermittelt und jeweils zwei sich entsprechende Einzelbilder sich entsprechender Fragmente der verschiedenen Qualitätsprofile auf Gleichheit untereinander geprüft werden.

6. Verfahren nach einem der voranstehenden Ansprüche, das für LiveTV und/oder VoD verwendet wird.

7. Verfahren nach einem der voranstehenden Ansprüche, bei dem die Qualitätsprofile sich voneinander in ihrer jeweiligen Auflösung, benötigten Bandbreite und/oder Bildwiederholungsrate unterscheiden.

8. Verfahren nacheinem der voranstehenden Ansprüche, bei dem der Client die Fragmente, soweit diese verschlüsselt sind, vor Durchführung des Verfahrens entschlüsselt.

9. Verfahren nach einem der voranstehenden Ansprüche bei dem der Client auf einem Nutzer-Endgerät implementiert wird.

10. Computerprogrammprodukt mit einem computerlesbaren Medium und einem auf dem computerlesbaren Medium gespeicherten Computerprogramm mit Programmcodemitteln, die dazu geeignet sind, bei Ablauf des Computerprogramms auf einem Computer bzw. einer geeigneten Recheneinheit ein Verfahren nach einem der Ansprüche 1 bis 9 auszuführen.

11. Computerprogramm mit Programmcodemitteln, die dazu geeignet sind, bei Ablauf des Computerprogramms auf einem Computer bzw. einer geeigneten Recheneinheit ein Verfahren nach einem der Ansprüche 1 bis 9 auszuführen.

## Claims

1. Method for the continuous monitoring of a synchronism between different quality profiles used in HTTP-based adaptive streaming with the respective provision of at least one video with individual images, in which for each quality profile of a plurality of quality profiles which are respectively assigned to different transmission rates, at least one specific individual image is determined for each fragment resulting from a fragmentation carried out, wherein the respective individual images to be determined of the mutually corresponding fragments of the different quality profiles from the plurality of quality profiles correspond to one another with regard to their arrangement within the respective fragment, and a content of the thus determined individual images of the corresponding fragments of the different quality profiles is checked for equality among each other, and an equality among the determined individual images is affirmed as long as existing deviations of the determined individual images among one another are within a defined tolerance range, wherein the method is carried out by a client, wherein the fragments resulting in each case from the fragmentation are downloaded by the client for carrying out the method.

2. The method according to claim 1, in which a time stamp of the at least one particular individual image determined for each fragment is additionally determined for each quality profile and the respective time stamps of the determined particular individual images of the corresponding fragments of the different quality profiles are checked for equality among each other.

3. The method according to claim 1 or 2, in which a respective initial image of the respective fragment is determined as the at least one individual image to be determined for each fragment.

4. The method according to claim 3, in which it is additionally checked whether the respective initial image is an I-frame.

5. The method according to any of the preceding claims, in which a plurality of mutually corresponding individual images in the mutually corresponding fragments of the different quality profiles are determined and respectively two mutually corresponding individual images of mutually corresponding fragments of the different quality profiles are checked for equality among each other.

6. The method according to any of the preceding claims, used for LiveTV and/or VoD.

7. The method according to any of the preceding claims, in which the quality profiles differ from each other in their respective resolution, required bandwidth and/or image refresh rate.

8. The method according to any of the preceding claims, in which the client decrypts the fragments, if encrypted, before carrying out the method.

9. The method according to any of the preceding claims, in which the client is implemented on a user terminal.

10. A computer program product with a computer-readable medium and a computer program with program code means stored on said computer-readable medium, said program code means being suitable to carry out a method according to one of claims 1 to 9 when said computer program is executed on a computer or a suitable computing unit.

11. A computer program with program code means that are suitable to carry out a method according to one of claims 1 to 9 when said computer program is executed on a computer or a suitable computing unit.

## Revendications

1. Procédé de surveillance continue d'un synchronisme entre différents profils de qualité utilisés dans la diffusion en continu à débit adaptif HTTP lors de la mise à disposition d'au moins une vidéo comportant des trames, pour lequel, pour chaque profil de qualité parmi une pluralité de profils de qualité associés respectivement aux différents débits de transmission, au moins une trame donnée est identifiée pour chaque fragment résultant d'une fragmentation réalisée, sachant que les trames à identifier pour les fragments homologues des différents profils de qualité parmi la pluralité de profils de qualité correspondent entre elles quant à leur disposition à l'intérieur du fragment respectif et qu'un contenu des trames ainsi identifiées pour les fragments homologues des différents profils de qualité est vérifié pour identifier leur égalité, et qu'une égalité entre les trames identifiées est déterminée tant que les écarts existants entre les trames ainsi identifiées se situent dans une plage de tolérance définie, ledit procédé étant exécuté par un client, les fragments résultant de la fragmentation étant téléchargées pour l'exécution du procédé par le client.

2. Procédé selon la revendication 1, pour lequel un horodatage de l'au moins une trame identifiée pour chaque fragment est identifié en plus pour chaque profil de qualité et les horodatages des trames données identifiées pour les fragments homologues des différents profils de qualité sont vérifiés pour identifier leur égalité.

3. Procédé selon la revendication 1 ou 2, pour lequel l'au moins une trame à identifier pour chaque fragment est une trame initiale du fragment correspondant.

4. Procédé selon la revendication 3, pour lequel il est vérifié en outre si la trame initiale correspondante est une inter-trame.

5. Procédé selon l'une des revendications précédentes, pour lequel plusieurs trames correspondantes sont identifiées dans les fragments homologues des différents profils de qualité et à chaque fois deux trames correspondantes des fragments homologues des différents profils de qualité sont vérifiées pour identifier leur égalité.

6. Procédé selon l'une des revendications précédentes, utilisé pour LiveTV et/ou VoD.

7. Procédé selon l'une des revendications précédentes, pour lequel les profils de qualité se distinguent les uns des autres quant à leur résolution, largeur de bande nécessaire et/ou fréquence de répétition d'image.

8. Procédé selon l'une des revendications précédentes, pour lequel le client déchiffre les fragments qui sont chiffrés, avant l'exécution du procédé.

9. Procédé selon l'une des revendications précédentes, pour lequel le client est implémenté sur un terminal d'utilisateur.

10. Produit de programme informatique doté d'un support lisible par ordinateur et d'un programme informatique stocké sur le support lisible par ordinateur, comportant des moyens de code de programme, configurés de manière à réaliser un procédé selon l'une des revendications 1 à 9 lors de l'exécution du programme informatique sur un ordinateur ou une unité de calcul appropriée.

11. Programme informatique comportant des moyens de code de programme, configurés de manière à réaliser un procédé selon l'une des revendications 1 à 9 lors de l'exécution du programme informatique sur un ordinateur ou une unité de calcul appropriée.
